# DEMANDE DE BREVET EUROPEEN

(11) **EP 1 014 601 A1**
(43) Date de publication de la demande: **28.06.2000**
(21) Numéro de dépôt: 99401016.3
(22) Date de dépôt: 26.04.1999
(51) Int. Cl.: H04B 7/26

(54) **Procédé de synchronisation dans un système de télécommunication**

(30) Priorité: 17.12.1998 FR 9815926
(71) Demandeur: ALCATEL, 75008 Paris (FR)
(72) Inventeur: Lejay, Frédéric, 75009 Paris (FR); Desblancs, Philippe, 75015 Paris (FR); Boulnois, Frédéric, 78750 Mareil-Marly (FR)
(74) Mandataire: Lamoureux, Bernard

(57) **Abrégé**

L'invention concerne un procédé de détermination de la position du début des trames d'une base fixe, la dite base fixe émettant un signal radio à accès multiple par répartition temporelle (AMRT) à une fréquence spécifique dans des intervalles de temps dans une zone géographique localisée pour communiquer avec une station mobile se trouvant dans la même zone géographique utilisant des règles de définition de décalages spécifiques permettant une détermination plus rapide du début des trames.

## Description

La présente invention concerne le domaine des systèmes de télécommunication à accès multiple par répartition temporelle (AMRT). Ces systèmes convoient un signal de données comprenant une partie de synchronisation et une partie de message dans une fenêtre temporelle sur un canal radio.

Pour l'interface air du système de téléphonie sans fil du standard GSM, il est utile d'utiliser un mécanisme de décalage de la fenêtre temporelle au sein de la trame sur le canal balise pour réduire les interférences avec le réseau GSM et les autres éléments fixes du système de téléphonie sans fil du standard GSM.

Les règles usuelles de décalage consistent à effectuer des décalages cycliques, aléatoires ou pseudo-aléatoires. Cependant ils ne permettent pas une détermination rapide de la position du début de la trame du canal balise sans signalisation spécifique ou sans connaissance du numéro de trame car la station mobile ne peut pas savoir quel intervalle de temps dans la trame a été utilisé par la base fixe. Dans le système de téléphonie sans fil du standard GSM, la station mobile ne peut alors pas connaître rapidement le numéro de trame en écoutant uniquement la voie balise si les séquences de décalage ne possèdent pas de propriété particulière.

Un moyen de détermination du début de la trame fréquemment utilisé dans l'art antérieur consiste à ajouter une signalisation supplémentaire dans le signal. Cette solution permet de trouver ce début de trame au prix d'une surcharge du signal qui rend l'utilisation de celui-ci plus lente ou bien demande un débit plus élevé.

L'objet de l'invention est de permettre de déterminer par la station mobile la position du début de la trame du canal balise aussi rapidement que possible, avec la seule connaissance de l'identifiant du canal balise de la base fixe (FPBI) diffusé sur la voie balise. L'invention permet aussi de déterminer pour toute trame la position de la fenêtre temporelle au sein de la trame du canal balise en connaissant le numéro de trame et le FPBI. Dans ce cadre, la probabilité de collusion entre les fenêtres temporelles du canal balise de deux bases fixes sera minimisée.

L'invention consiste en une méthode de détermination de la position du début de trame d'une base fixe, la dite base fixe émettant un signal radio à accès multiple par répartition temporelle (AMRT) à une fréquence spécifique dans différents intervalles de temps dans une zone géographique localisée pour communiquer avec une station mobile se trouvant dans la même zone géographique caractérisée. Elle comprend les étapes suivantes :
- on définit les règles de décalages ;
- on définit les séquences de décalage des fenêtres temporelles selon les règles de décalage, chaque séquence définissant différents décalages à partir d'une position initiale de la fenêtre temporelle, la base émettant le signal suivant une séquence spécifique de décalage de fenêtre temporelle ;
- on mémorise les règles de décalage des fenêtres temporelles et les séquences de décalage des fenêtres temporelles dans la station mobile ;
- la station mobile cherche une fenêtre de synchronisation transmise par la base fixe ;
- la station mobile cherche au moins une fenêtre de synchronisation postérieure pour déterminer le(s) décalage(s) pour chaque fenêtre en fonction des précédentes suivant les règles de décalage ;
- La station mobile détermine la position du début de trame de la base fixe à partir d'au moins un décalage déterminé.

Avantageusement, la séquence utilisée par la base fixe est identifiée par la station mobile à partir d'une signalisation émise par la base fixe.

De manière préférentielle, au plus deux mesures de décalages permettent de trouver la position du début des trames. Dans une variante, 8 bases fixes peuvent transmettre en parallèle dans la même trame sans collusion.

Dans une réalisation avantageuse, la position de la fenêtre temporelle dans la trame peut être déterminée à partir du numéro de trame.

Dans des variantes de réalisation, les séquences se décomposent en sous-séquences élémentaires ou les sous-séquences consécutives de décalage s'enchaînent sans répétition d'un intervalle de temps.

L'invention concerne aussi une base fixe émettant un signal radio à accès multiple par répartition temporelle (AMRT) à une fréquence spécifique dans différents intervalles de temps dans une zone géographique localisée pour communiquer avec une station mobile se trouvant dans la même zone géographique pour l'application du procédé objet de l'invention. Elle est caractérisée en ce qu'elle comprend des moyens de mémorisation d'au moins une séquence de décalage des fenêtres temporelles selon les règles de décalage, chaque séquence définissant différents décalages à partir d'une position initiale de la fenêtre temporelle, la base émettant le signal suivant une séquence spécifique de décalage de fenêtre temporelle.

De la même manière, une station mobile de réception de signal radio à accès multiple par répartition temporelle (AMRT) pour communiquer avec une base fixe se trouvant dans la même zone géographique pour l'application du même procédé se caractérise en ce qu'elle comprend des moyens de mémorisation des règles de décalages, des moyens de mémorisation d'au moins une séquence de décalage des fenêtres temporelles selon les règles de décalage, chaque séquence définissant différents décalages à partir d'une position initiale de la fenêtre temporelle, la base émettant le signal suivant une des séquences de décalage de fenêtre temporelle préalablement mémorisées par la dite station mobile, des moyens pour rechercher une fenêtre de synchronisation transmise par la base fixe, des moyens pour rechercher au moins une fenêtre de synchronisation postérieure pour déterminer le(s) décalage(s) pour chaque fenêtre en fonction des précédentes suivant les règles de décalage, des moyens pour déterminer la position du début de trame de la base fixe à partir d'au moins un décalage déterminé. Lorsque l'on regarde la position relative de la fenêtre temporelle du canal balise dans des trames successives, il est possible d'identifier la position du début de trame. Des séquences spécifiques sont utilisées pour obtenir des performances optimales (identification rapide et fenêtre d'observation réduite). De plus, ces séquences de décalage sont construites à partir d'une famille de sous-séquences de base selon un certain paramétrage, lequel est choisi pour chaque base fixe. Usuellement, ce nombre de paramétrages est limité pour chaque base fixe.

Les séquences de décalage des fenêtres temporelles sont telles qu'il est possible d'identifier la position de l'intervalle de temps 0 en observant un nombre limité de séquences successives par exemple 3, sans connaître le numéro de trame.

L'enchaînement des sous-séquences de décalage est changé régulièrement d'une manière déterministe de manière à ce qu'il soit possible de trouver l'intervalle de temps (TN) qui sera utilisé au sein d'une trame donnée en connaissant l'identifiant du canal balise de la base fixe.

Plusieurs bases fixes peuvent fonctionner en parallèle sur des fenêtres différentes sans collusion à aucun moment. On peut utiliser autant de bases qu'il y a d'intervalles de temps dans une trame. Habituellement une trame contient 8 intervalles de temps.

Dans une réalisation préférée, Le système concerne une base fixe (FP) et des stations mobiles (MS) d'un système de téléphonie sans fil du standard GSM (CTS). Les stations mobiles peuvent être dans différents états : soit elles ne sont pas enregistrées et n'ont pas d'information sur la base fixe si ce n'est l'identifiant du canal balise de cette base (FPBI), soit elles sont enregistrées et doivent connaître tous les paramètres de cette base, dont le numéro de trame courant.

L'utilisation du décalage de la fenêtre temporelle au sein de la trame sur le canal balise permet de réduire les interférences entre les bases fixes et les interférences avec le réseau GSM. Il peut s'avérer également utile que le canal balise ne soit pas transmis sur un intervalle de temps fixe pour faciliter son observation par la station mobile.

Ce décalage est défini tel qu'une station mobile non enregistrée puisse trouver la position de l'intervalle de temps 0 de la base fixe avec la seule connaissance du FPBI. Une station mobile enregistrée peut prédire dans quel intervalle de temps la base fixe transmet son signal balise grâce au numéro de trame et au FPBI.

Avantageusement, les décalages peuvent ne pas excéder 4 intervalles de temps, les risques de collusion entre deux bases ont une probabilité faible, et les intervalles de temps sont utilisés de manière équiprobable. Une mauvaise détermination de la fenêtre temporelle n'est pas possible pendant le passage d'une sous-séquence de décalage à une autre.

De manière préférentielle, on utilise 16 familles de sous-séquences de 8 décalages de fenêtre temporelle (TSS), chaque sous-séquence parcourant les 8 intervalles de temps possible d'une trame. Celles-ci permettent de déterminer la position du début de la trame avec seulement 3 observations successives. Les TSS utilisés sont de plus régulièrement changés selon le numéro de trame et le FPBI.

Dans un premier exemple de réalisation avantageux, on interdit un décalage nul dans une sous-séquence et lors du passage d'une sous-séquence à une autre, le premier intervalle de temps d'une nouvelle sous-séquence est le dernier de la sous-séquence précédente (celui-ci est donc répété). Cette disposition permet d'éviter une erreur de détermination de la position de la fenêtre temporelle, un décalage nul caractérisant le changement de sous-séquence.

Lorsqu'elle n'est pas enregistrée, la station mobile recherche une fenêtre temporelle de fréquence. Celle-ci est transmise toutes les 52 trames par la base fixe sur la fréquence balise. Quand la fenêtre de fréquence est trouvée, la fenêtre temporelle de synchronisation est décodée 26 trames plus tard et le FPBI en est extrait. Le FPBI est nécessaire pour identifier la famille de TSS utilisée. La station mobile recherche ensuite la prochaine fenêtre temporelle de fréquence 52 trames plus tard dans une fenêtre de 9 intervalles de temps (de -4 à +4 autour de l'intervalle de temps de la fenêtre temporelle de fréquence précédemment trouvée). Le décalage avec l'intervalle de temps de la première fenêtre temporelle de fréquence est sauvegardée (s1). On réitère le processus pour obtenir la deuxième valeur de décalage (s2).

À partir de s1, de s2 et de la famille de TSS, il est possible de trouver dans la table des sous-séquences quel intervalle de temps est utilisé. La position de l'intervalle 0, donc le début de la trame, peut alors être trouvée. Si s1 ou s2 est nul, la base fixe était en train de changer de sous-séquence et la procédure doit être suivie à nouveau.

Lorsqu'elle est enregistrée, une station mobile peut chercher à prédire l'intervalle de temps du canal balise. La famille de 4 sous-séquences utilisée par la base fixe et leur ordre sont extraits du FPBI. On peut en déduire la série TSS(0), TSS(1), TSS(2), TSS(3). Par exemple, on choisit de définir 16 familles pour le CTS, 4 bits dans le FPBI seront utilisés pour désigner laquelle est utilisée par la base fixe. On construit ensuite une série de 4 sous-séquences à partir de cette famille. Le FPBI peut par exemple indiquer: TSS(0)=TSS#1, TSS(1)=TSS#1, TSS(2)=TSS#3, TSS(3)=TSS#1. Ceci nécessite 4 fois 2 bits dans le FPBI pour désigner les 4 sous-séquences. L'intervalle de temps initial (TNI) est aussi extrait à partir du FPBI.

Pour décrire les décalages, on utilise des multitrames à 52, des sous-ensembles, des ensembles et des super-ensembles que l'on définit comme suit :
- Une multitrame à 52 contient 52 trames. Le canal balise a une structure de multitrame à 52. L'intervalle de temps est le même pour la fenêtre temporelle de fréquence et celle de synchronisation qui suit.
- Un sous-ensemble contient 25 multitrames à 52. Le décalage est effectué selon une sous-séquence de décalage déterminée. Le dernier intervalle de temps est le même que le premier : TN(24)=TN(16)=TN(8)=TN(0).
- Un ensemble est composé de 4 sous-ensembles et de 2 multitrames à 52. Les quatre sous-ensembles, numérotés de 0 à 3, utilisent respectivement 4 sous-séquences de décalage TSS(0) à TSS(3) spécifiques à la base fixe. Chaque ensemble se termine par les 2 multitrames à 52 utilisant le dernier intervalle de temps du sous-ensemble 3. Pour tous les sous-ensembles d'un même ensemble, le premier et le dernier intervalle de temps est le même. Cette propriété est alors transmise à l'ensemble. Dans un ensemble, le passage d'un sous-ensemble à un autre ne modifie pas l'intervalle de temps.
- Un super-ensemble comprend 8 ensembles successifs possédant la propriété suivante : le premier intervalle de temps se décale suivant TSS(0). Après les 8 ensembles, on retrouve la configuration initiale.

La structure générale de décalage possède une période globale de un super-ensemble, c'est-à-dire 16*51*52 trames.

Un deuxième exemple de réalisation utilisant le même procédé mais avec une autre implémentation des séquences et des sous-séquences est décrit ci-dessous. Cette implémentation présente l'avantage de ne pas avoir à répéter un intervalle de temps lorsque l'on passe d'une sous-séquence à l'autre. Ceci est rendu possible grâce à l'utilisation de sous-séquences ayant des propriétés supplémentaires par rapport aux précédentes. Cela rend plus rapide la détermination du début de trame par une station mobile non enregistrée car il n'y a pas de cas d'échec.

Pour une base fixe, on choisit un couple ordonné de sous-séquences de décalage parmi N couples prédéfinis. Le couple utilisé par la base fixe considérée est signalé dans le FPBI (4 bits pour 16 couples par exemple), et l'ordre dans le couple (1ère sous-séquence, 2ème sous-séquence) est déterminé par 1 bit du FPBI. On note ce couple (TSS#1, TSS#2). Les N couples ont été construits tels que l'on puisse déterminer de manière unique le début de la trame par 3 observations successives du canal balise, y compris lorsque l'on passe d'une sous-séquence du couple à l'autre.

Exemple de couple possédant les propriétés requises :
TSS#1:séquence d'intervalle 0 2 1 4 7 6 5 3 0
séquence de décalage 2 -1 3 3 -1 -1 -2 -3
TSS#2:séquence d'intervalle 0 1 5 6 3 7 4 2 0
séquence de décalage 1 4 1 -3 4 -3 -2 -2

On définit ensuite une loi d'utilisation des sous-séquences TSS#1 et TSS#2 permettant de facilement retrouver, en fonction du numéro de trame, l'intervalle de temps à utiliser. Pour cela, on définit des sous-ensembles de 17 multitrames à 52, avec comme loi d'utilisation :
- sous-séquence TSS#1 sur x multitrames à 52
- sous-séquence TSS#2 sur 8 multitrames à 52
- sous-séquence TSS#1 sur 9-x multitrames à 52
avec x entier compris entre 1 et 8.

Puis on définit un ensemble comme étant l'enchaînement de 3 sous-ensembles, soit 51 multitrames à 52. La loi d'utilisation des TSS sur un ensemble est :
- sous-séquence TSS#1 sur x1 multitrames à 52
- sous-séquence TSS#2 sur 8 multitrames à 52
- sous-séquence TSS#1 sur (9-x1)+x2 multitrames à 52
- sous-séquence TSS#2 sur 8 multitrames à 52
- sous-séquence TSS#1 sur (9-x2)+x3 multitrames à 52
- sous-séquence TSS#2 sur 8 multitrames à 52
- sous-séquence TSS#1 sur 9-x3 multitrames à 52
avec x1, x2, x3 entiers compris entre 1 et 8.

Les nombres x1, x2 et x3 sont propres à chaque base fixe et sont déterminés à partir du FPBI (3x3=9 bits au total).

Exemple pour x1 =2, x2=3, x3=5 avec un premier intervalle égal à 0.
1er sous-ensemble :
   TSS utilisé. 1 2 2 2 2 2 2 2 2 1 1 1 1 1 1 1
   intervalle 0 2 0 1 5 6 3 7 4 2 1 4 7 6 5 3 0
2ème sous-ensemble :
   TSS utilisé 1 1 1 2 2 2 2 2 2 2 2 1 1 1 1 1 1
   intervalle 2 1 4 2 0 1 5 6 3 7 4 7 6 5 3 0 2
3ème sous-ensemble :
   TSS utilisé 1 1 1 1 1 2 2 2 2 2 2 2 2 1 1 1 1
   intervalle 1 4 7 6 5 6 3 7 4 2 0 1 5 3 0 2 1

Dans tout sous-ensemble, la sous-séquence TSS#2 est toujours utilisée pour 8 décalages successifs, donc l'intervalle de temps après le dernier décalage est égal à celui avant le premier décalage. La sous-séquence TSS#1 est, elle, utilisée pour 9 décalages dans chaque sous-ensemble, ce qui crée un décalage de 1 dans chacun de ces sous-ensembles. Pour chaque ensemble, le premier intervalle de temps est obtenu par 3*1 décalages suivant la sous-séquence TSS#1 par rapport au premier intervalle de temps de l'ensemble précédent.

On définit un super-ensemble comme l'enchaînement de 8 ensembles. On aura donc effectué 8*3 décalages suivant la sous-séquence TSS#1, ce qui revient à un décalage nul. L'intervalle de temps après le dernier décalage d'un super-ensemble est alors identique au premier intervalle de temps de ce super-ensemble. L'intervalle de temps initial des super-ensembles est propre à chaque base fixe. On le note TNI et il est donné par 3 bits du FPBI.

On a donc réalisé un motif d'une longueur de 8*51*52 trames. Le nombre de motifs différents est égal à (16*2)*(8*8*8)*8=2¹⁷, ce qui correspond à 17 bits signalés dans le FPBI.

Il est aussi possible de définir dans un dernier exemple de réalisation d'autres lois d'utilisation des sous-séquences TSS#1 et TSS#2 permettant de s'affranchir de la définition des sous-ensembles dans un ensemble. L'implémentation qui en résulte présente l'avantage de ne pas utiliser la sous-séquence TSS#2 uniquement pour 8 décalages successifs. On peut définir par exemple la loi d'utilisation suivante sur un ensemble de 51 multitrames à 52 :
- sous-séquence TSS#1 sur x5 multitrames à 52
- sous-séquence TSS#2 sur x4 multitrames à 52
- sous-séquence TSS#1 sur x3 multitrames à 52
- sous-séquence TSS#2 sur x2 multitrames à 52
- sous-séquence TSS#1 sur xl multitrames à 52
- sous-séquence TSS#2 sur 8 multitrames à 52
- sous-séquence TSS#1 sur 8-xl multitrames à 52
- sous-séquence TSS#2 sur 8-x2 multitrames à 52
- sous-séquence TSS#1 sur 8-x3 multitrames à 52
- sous-séquence TSS#2 sur 8-x4 multitrames à 52
- sous-séquence TSS#1 sur 11-x5 multitrames à 52
avec x1, x2, x3, x4 entiers compris entre 1 et 7, et x5 entier compris entre 1 et 10.

Les nombres x1, x2, x3, x4 et x5 sont propres à chaque base fixe et sont déterminés à partir du FPBI (4*3 +1*4=16 bits au total).

Exemple pour x1 =2, x2=3, x3=5, x4=4, x5=7 avec un premier intervalle (TNI) égal à 0 :
TSS . 1 1 1 1 1 1 2 2 2 2 1 1 1 1 1 2 2 2 1 1
   Intervalle 0 2 1 4 7 6 5 6 3 7 4 7 6 5 3 0 1 5 6 5 3
TSS 2 2 2 2 2 2 2 2 1 1 1 1 1 1 2 2 2 2 2 1 1
   Intervalle 7 4 2 0 1 5 6 3 0 2 1 4 7 6 3 7 4 2 0 2 1
TSS 1 2 2 2 2 1 1 1 1
   Intervalle 4 2 0 1 5 3 0 2 1

La propriété de l'ensemble est conservée : pour chaque ensemble, le premier intervalle de temps est obtenu par 3 décalages suivant la sous-séquence TSS#1 par rapport au premier intervalle de temps de l'ensemble précédent.

Comme dans la réalisation précédente, le super-ensemble est défini comme l'enchaînement de 8 ensembles. On conserve donc la propriété que l'intervalle de temps après le dernier décalage d'un super-ensemble est identique au premier intervalle de temps de ce super-ensemble.

On a ainsi réalisé un motif d'une longueur de 8*51*52 trames. Le nombre de motifs différents est égal à (16*2)*(7*7*7*7*10)*8, ce qui correspond à 23 bits signalés dans le FPBI.

## Revendications

1. Procédé de détermination de la position du début des trames d'une base fixe, la dite base fixe émettant un signal radio à accès multiple par répartition temporelle (AMRT) à une fréquence spécifique dans des intervalles de temps dans une zone géographique localisée pour communiquer avec une station mobile se trouvant dans la même zone géographique caractérisé en ce qu'elle comprend les étapes suivantes :
- on définit des règles de décalages ;
- on définit la(les) séquence(s) de décalage de la position de la fenêtre temporelle dans la trame selon les règles de décalage, chaque séquence définissant différents décalages à partir d'une position initiale de la fenêtre temporelle, la base émettant le signal suivant une séquence spécifique de décalage de fenêtre temporelle ;
- on mémorise les règles de décalage des fenêtres temporelles et la(les) séquence(s) de décalage des fenêtres temporelles dans la station mobile ;
- la station mobile cherche une fenêtre de synchronisation transmise par la base fixe ;
- la station mobile cherche au moins une fenêtre de synchronisation postérieure pour déterminer le(s) décalage(s) pour chaque fenêtre en fonction des précédentes suivant les règles de décalage ;
- La station mobile détermine la position du début de trame de la base fixe à partir d'au moins un décalage déterminé par la connaissance des séquences utilisées par la base fixe.

2. Procédé de détermination de la position du début des trames d'une base fixe selon la revendication 1 caractérisé en ce que la séquence utilisée par la base fixe est identifiée par la station mobile à partir d'une signalisation émise par la base fixe.

3. Procédé de détermination de la position du début des trames d'une base fixe selon l'une quelconque des revendications précédentes caractérisé en ce qu'au plus deux mesures de décalages permettent de trouver la position du début des trames.

4. Procédé de détermination de la position du début des trames d'une base fixe selon l'une quelconque des revendications précédentes caractérisé en ce que 8 bases fixes peuvent transmettre en parallèle dans la même trame sans collusion.

5. Procédé de détermination de la position du début des trames d'une base fixe selon l'une quelconque des revendications précédentes caractérisé en ce que la position de la fenêtre temporelle dans la trame peut être déterminée à partir du numéro de trame.

6. Procédé de détermination de la position du début de trame d'une base fixe suivant l'une quelconque des revendications précédentes caractérisé en ce que les séquences se décomposent en sous-séquences élémentaires.

7. Procédé de détermination de la position du début de trame d'une base fixe suivant l'une quelconque des revendications précédentes caractérisé en ce que les sous-séquences consécutives de décalage s'enchaînent sans répétition d'un intervalle de temps.

8. Base fixe émettant un signal radio à accès multiple par répartition temporelle (AMRT) à une fréquence spécifique dans différents intervalles de temps dans une zone géographique localisée pour communiquer avec une station mobile se trouvant dans la même zone géographique pour l'application du procédé de la revendication 1 caractérisée en ce qu'elle comprend des moyens de mémorisation d'au moins une séquence de décalage des fenêtres temporelles selon les règles de décalage, chaque séquence définissant différents décalages à partir d'une position initiale de la fenêtre temporelle, la base émettant le signal suivant une séquence spécifique de décalage de fenêtre temporelle.

9. Station mobile de réception de signal radio à accès multiple par répartition temporelle (AMRT) pour communiquer avec une base fixe se trouvant dans la même zone géographique pour l'application du procédé de la revendication 1 caractérisée en ce qu'elle comprend des moyens de mémorisation des règles de décalages, des moyens de mémorisation d'au moins une séquence de décalage des fenêtres temporelles selon les règles de décalage, chaque séquence définissant différents décalages à partir d'une position initiale de la fenêtre temporelle, la base émettant le signal suivant une des séquences de décalage de fenêtre temporelle préalablement mémorisées par la dite station mobile, des moyens pour rechercher une fenêtre de synchronisation transmise par la base fixe, des moyens pour rechercher au moins une fenêtre de synchronisation postérieure pour déterminer le(s) décalage(s) pour chaque fenêtre en fonction des précédentes suivant les règles de décalage, des moyens pour déterminer la position du début de trame de la base fixe à partir d'au moins un décalage déterminé.
